# EUROPEAN PATENT APPLICATION

(11) **EP 4 834 601 A1**
(43) Date of publication of application: **04.11.2026**
(21) Application number: 24910204.7
(22) Date of filing: 22.10.2024
(51) Int. Cl.: B60C 23/04

(54) **TIRE PRESSURE MONITORING SYSTEM AND CALIBRATION METHOD FOR BLE TIRE PRESSURE SENSOR**

(30) Priority: 28.12.2023 CN 202311845699
(71) Applicant: Baolong Huf Shanghai Electronic Co., Ltd., Shanghai 201619 (CN)
(72) Inventor: SHI, Weihua, Shanghai 201619 (CN); CHEN, Wandong, Shanghai 201619 (CN); XIE, Zhongyan, Shanghai 201619 (CN); XIE, Zuowei, Shanghai 201619 (CN)
(74) Representative: Hoffmann Eitle
(86) International application number: PCT/CN2024/126479
(87) International publication number: WO 2025/139263

(57) **Abstract**

The present application relates to a tire pressure monitoring system and a calibration method for a BLE tire pressure sensor. The tire pressure monitoring system comprises: a BLE master node; BLE tire pressure sensors, which are arranged on wheels, and are configured to acquire state information of corresponding tires and send same to the BLE master node; and BLE positioning anchors, which are mounted on a vehicle body of a vehicle, and are connected to a vehicle network by means of physical connections, wherein the BLE positioning anchors send ID identifiers thereof and scanned RSSI data of the BLE tire pressure sensors to the BLE master node by means of the vehicle network, and on the basis of the ID identifiers of the BLE positioning anchors and the RSSI data, the BLE master node calibrates the positions of the tires on which the BLE tire pressure sensors are located. The present tire pressure monitoring system is capable of automatically calibrating the tire pressure sensors, and can relay data from the tire pressure sensors, thereby improving the safety and reliability of vehicle operation.

## Description

### Technical Field

The present application mainly relates to the technical fields of vehicle automatic driving, and in particular to a tire pressure monitoring system and a calibration method for a BLE tire pressure sensor.

### Background

With the development of automotive technology, vehicle safety and convenience have attracted increasing attention. BLE digital keys and Tire Pressure Monitoring System (TPMS) are two key technologies in this field. The BLE digital key enables keyless vehicle entry and start, improving user experience. The TPMS monitors tire pressure and temperature in real time to ensure driving safety. However, these two systems generally operate independently and require separate hardware and software, which increases overall costs and system complexity. Accordingly, it is necessary to develop an integrated system combining the two functions to reduce costs and enhance integration.

Chinese patent application CN116424265A discloses an intelligent key entry and start device integrated with tire pressure monitoring, a control method and a vehicle. The solution needs to use wheel speed data during vehicle operation, Received Signal Strength Indication (RSSI) and Angle-of-Arrival (AOA) data to perform position calibration of tire pressure sensors. Since wheel speed data and RSSI are not synchronized, RSSI is highly susceptible to environmental interference when the vehicle is in motion. This calibration method involves complicated procedures and cannot achieve high-precision calibration theoretically. In addition, the calibration of each tire position must be carried out while the vehicle is running, and it is difficult for ordinary vehicle owners to re-calibrate data after replacing mobile devices.

Chinese patent application CN116424265A discloses an intelligent key entry and start device integrated with tire pressure monitoring, a control method and a vehicle. Its technical solution mainly adopts low-frequency signals to wake up tire pressure sensors, which leads to higher system costs.

### Summary

The technical problem to be solved by the present application is to provide a tire pressure monitoring system and a calibration method for a BLE tire pressure sensor, which can automatically calibrate tire pressure sensor and improve the safety and reliability of vehicle operation.

Specifically, the present invention provides a tire pressure monitoring system, comprising:
a BLE master node;
a BLE tire pressure sensor, mounted on wheel to acquire a stage information of a corresponding tire, the BLE tire pressure sensor transmitting obtained tire stage information to the BLE master node;
a BLE positioning anchor, mounted on a vehicle body of a vehicle, connecting to a vehicle network via physical connections, the BLE positioning anchor transmitting an own ID identifier and RSSI data of the BLE tire pressure sensor obtained by scanning to the BLE master node through the vehicle network, the BLE master node calibrating a tire position of the BLE tire pressure sensor based on the ID identifier and the RSSI data.

According to one embodiment of the present application, the BLE master node determines mounting position of the BLE positioning anchor on the vehicle body according to the ID identifier of the BLE positioning anchor, the BLE master node filters and analyzes received RSSI data and sorting by signal strength, and the BLE master node calibrates the tire position corresponding to the BLE tire pressure sensor based on mounting position of the BLE positioning anchor on the vehicle body and signal strength.

According to one embodiment of the present application, if a corresponding tire acceleration obtained by the BLE tire pressure sensor is 0, enable a low-speed Bluetooth advertising to send a Bluetooth signal, the Bluetooth signal including the ID identifier of the BLE tire pressure sensor;
the BLE master node scans the Bluetooth signal and establishes Bluetooth connection based on the ID identifier of the BLE tire pressure sensor.

According to one embodiment of the present application, after the connection is established between the BLE master node and the BLE tire pressure sensor, the BLE tire pressure sensor transmits acquired tire state information to the BLE master node according to changes of the tire pressure and/or acceleration of a corresponding tire.

According to one embodiment of the present application, the BLE tire pressure sensor is powered by an independent power supply.

According to one embodiment of the present application, the system further comprising a body control unit and a BLE digital key, the BLE digital key initiating Bluetooth advertising to broadcast the ID identifier that contains the BLE digital key; the BLE master node scanning the Bluetooth signal and establishing a Bluetooth connection based on the ID identifier of the BLE digital key;
the body control unit executing door lock unlocking and/or vehicle startup according to an identification result of the BLE digital key by the BLE master node.

According to one embodiment of the present application, the BLE master node transmits the tire position where the BLE tire pressure sensor is arranged and corresponding tire state information to the body control unit via the vehicle network.

The present invention provides a calibration method for a BLE tire pressure sensor, applicable to the above-mentioned tire pressure monitoring system, comprising:
S1: arranging a BLE tire pressure sensor on a wheel to acquire corresponding tire state information;
S2: the BLE tire pressure sensor establishing a Bluetooth connection with the BLE master node and transmitting the acquired tire state information to the BLE master node;
S3: mounting BLE positioning anchors on a vehicle body of a vehicle, connecting to a vehicle network via physical connections, the BLE positioning anchors transmitting an own ID identifier to the BLE master node through the vehicle network, the BLE master node obtaining a tire position of the BLE tire pressure sensor based on the ID identifier;
S4: the BLE master node transmitting a calibration notification to one of the BLE positioning anchors, after receiving the calibration notification, the BLE positioning anchors scanning for Bluetooth advertising from the BLE tire pressure sensor, the BLE positioning anchors transmitting the own ID identifier and RSSI data of the BLE tire pressure sensor obtained by scanning to the BLE master node through the vehicle network, the BLE master node calibrating a tire position of the BLE tire pressure sensor based on the ID identifier and the RSSI data;
S5: the BLE master node storing the ID identifier of the BLE tire pressure sensor and the position of its corresponding tire.

According to one embodiment of the present application, in step S4, the BLE master node filters and analyzes the received RSSI data and sorts the data according to signal strength., the BLE master node calibrating the tire position corresponding to the BLE tire pressure sensor based on the mounting positions of the BLE positioning anchors on the vehicle body and signal strength.

According to one embodiment of the present application, the calibration method further comprises step S6, the BLE master node transmits the tire position of the BLE tire pressure sensor and the acquired tire state information outward via the vehicle network according to the vehicle operating state.

According to one embodiment of the present application, if replacing one BLE tire pressure sensor, the BLE master node detects absence of the corresponding ID identifier of the BLE tire pressure sensor; perform steps S4 and S5 to calibrate the BLE tire pressure sensor, storing the ID identifier of the BLE tire pressure sensor and corresponding tire position.

According to one embodiment of the present application, the BLE tire pressure sensor realizes OTA upgrade via the vehicle network according to a diagnostic requirement of the vehicle network system.

According to one embodiment of the present application, if the tire state information of the BLE tire pressure sensor acquired by the BLE master node is abnormal or cannot be collected, perform following steps:
T1: traversing all BLE positioning anchors, and the BLE master node sends a calibration notification to one of the BLE positioning anchors that closest to the BLE tire pressure sensor;
T2: the BLE positioning anchors starting scanning Bluetooth advertisement of the BLE tire pressure sensor, if a connection is established between the BLE positioning anchors and the BLE tire pressure sensor, then the BLE positioning anchors transmits an own ID identifier and RSSI data of the BLE tire pressure sensor obtained by scanning to the BLE master node through the vehicle network; if the connection cannot be established upon timeout, then sending feedback to the BLE master node, returning to Step T1.

According to one embodiment of the present application, if the BLE master node fails to collect tire state information from any one BLE tire pressure sensor, the BLE master node follows the proximity principle, designate one or several of the BLE positioning anchors to receive tire state information from the BLE tire pressure sensor, the designated BLE positioning anchors serve as relay nodes of the BLE master node to transmit the tire state information of the BLE tire pressure sensor to the BLE master node.

The present invention provides a tire pressure monitoring system and a calibration method for a BLE tire pressure sensor, through installing multiple BLE positioning anchors on the vehicle, the BLE positioning anchors scan RSSI data of BLE tire pressure sensor and calibrate the tire positions corresponding to the BLE tire pressure sensor based on the ID identifiers of the BLE positioning anchors and the RSSI data, thus, realizing automatic calibration of tire pressure sensor, which improves the safety and reliability of vehicle operation.

It should be understood that both the foregoing general description and the following detailed description of the present invention are exemplary and explanatory, and are intended to provide further explanation of the invention as set forth in the claims.

### Brief Description of the Drawings

The drawings are included to provide a further understanding of the present application, and they are included and constitute a part of the present application, the drawings show the embodiments of the present application, and serving to explain the principles of the present application together with the description. In the drawings:
Fig. 1 is a structural schematic diagram of a tire pressure monitoring system according to an embodiment of the present invention.
Fig. 2 is a flow block diagram of a calibration method for a BLE tire pressure sensor according to an embodiment of the present invention.

### Preferred Embodiment of the Present Disclosure

It should be noted that the embodiments and features thereof in the present application may be combined with each other without conflict.

The technical solutions in the embodiments of the present application will be clearly and completely described below in conjunction with the drawings in the embodiments of the present application. Obviously, the described embodiments are parts of the embodiments of this application, but not all of them. Based on the embodiments in the present application, all other embodiments obtained by persons of ordinary skill in the art without making creative efforts belong to the protection scope of the present application.

It should be noted that the terms used herein are only for describing specific embodiments, and are not intended to limit the exemplary embodiments according to the present application. As used herein, unless the context clearly dictates otherwise, singular forms are also intended to include plural forms, in addition, it should be understood that when the terms "contain" and/or "include" are used in this specification, they indicate the presence of features, steps, operations, devices, components and/or combinations thereof.

The relative arrangements of components and steps, numerical expressions and numerical values set forth in these embodiments do not limit the scope of the present application unless specifically stated otherwise. At the same time, it should be understood that, for the convenience of description, the sizes of the various parts shown in the drawings are not drawn according to the actual proportional relationship. Techniques, methods and devices known to those of ordinary skill in the relevant art may not be discussed in detail, but where appropriate, such techniques, methods and devices should be considered part of the authorized specification. **In** all embodiments shown and discussed herein, any specific values should be construed as illustrative only, and not as limiting. Therefore, other examples of the exemplary embodiment may have different values. It should be noted that like numerals and letters denote like items in the following figures, therefore, once an item is defined in one figure, it does not require further discussion in subsequent drawings.

In the description of the present application, it should be understood that orientation words such as "front, back, up, down, left, right", " landscape, portrait, vertical, horizontal" and "top, bottom" etc. indicating the orientation or positional relationship is generally based on the orientation or positional relationship shown in the drawings, only for the convenience of describing the application and simplifying the description, in the absence of a contrary statement, these orientation words do not indicate or imply that the device or element referred to must have a specific orientation or be constructed and operated in a specific orientation, and therefore cannot be construed as limiting the scope of protection of this application; the orientation words "inside and outside" refer to inside and outside relative to the outline of each part itself.

**In** addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

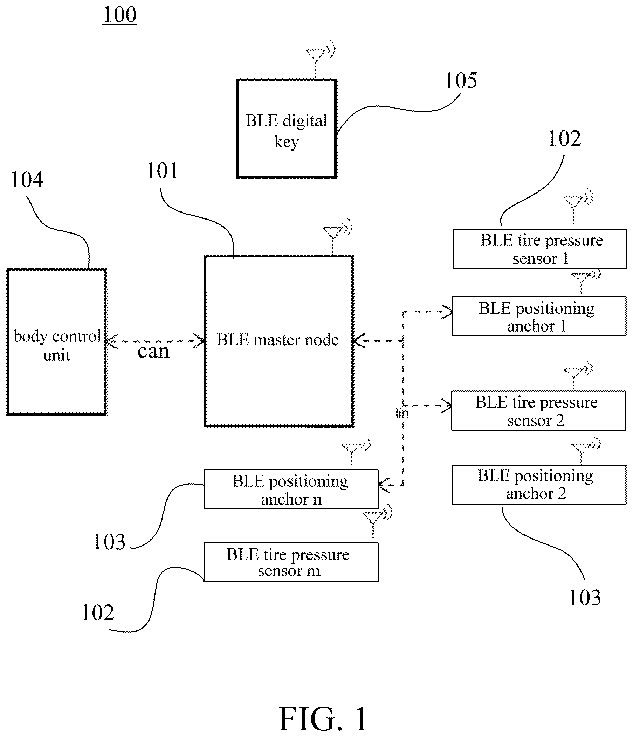

Fig. 1 shows a structural schematic diagram of a tire pressure monitoring system according to an embodiment of the present invention. As illustrated, the tire pressure monitoring system 100 mainly includes a BLE main node 101, a BLE tire pressure sensor 102 and BLE positioning anchors 103.

Wherein, multiple BLE tire pressure sensors 102 are mounted on the wheels to acquire state information of the corresponding tires. Normally, one BLE tire pressure sensor 102 is installed on each tire of the vehicle. Determine the quantity m of the BLE tire pressure sensors 102 by the number of vehicle tires. Take a four-wheel vehicle as an example, m is 4, which means four BLE tire pressure sensor 102 are equipped. The BLE tire pressure sensors 102 transmit the acquired tire state information to the BLE main node 101.

Multiple BLE positioning anchors 103 are mounted on the vehicle body and connected to the vehicle network via physical connections. The number of BLE positioning anchors 103 is n, and n is greater than or equal to m, so as to ensure that each BLE tire pressure sensor 102 can be positioned by one of the BLE positioning anchors 103. The BLE positioning anchors 103 transmit their own ID identifiers and the scanned RSSI data of the BLE tire pressure sensor 102 to the BLE master node 101 through the vehicle network. The BLE master node 101 calibrates the tire positions of the BLE tire pressure sensor 102 based on the ID identifiers of the BLE positioning anchors 103 and the RSSI data, so as to complete automatic calibration of the BLE tire pressure sensor 102.

Preferably, the BLE master node 101 determines the positions of the BLE positioning anchors 103 on the vehicle body according to their ID identifiers. Since the BLE positioning anchors 103 are connected to the BLE master node 101 via the vehicle network, the relative positions and distances of the BLE positioning anchors with respect to the BLE master node 101 are fixed. That is to say, the BLE master node 101 can acquire the position of each BLE positioning anchors 103 on the vehicle body. The BLE master node 101 filters and analyzes the received RSSI data and sorts the data by signal strength, and calibrates the tire positions of the BLE tire pressure sensors 102 according to the positions of the BLE positioning anchors 103 on the vehicle body and the signal strength. For example, if one of the BLE positioning anchors 103 is mounted on the wheel arch of the right rear wheel, the RSSI data with the strongest signal received by it shall come from the BLE tire pressure sensor 102 installed on the right rear wheel. The BLE master node 101 calibrates that the corresponding BLE tire pressure sensor 102 is mounted on the right rear wheel based on this BLE positioning anchor 103 and the received RSSI data.

Preferably, if the tire acceleration acquired by the BLE tire pressure sensor 102 is 0, activate low-speed Bluetooth advertising to broadcast Bluetooth signals, and the Bluetooth signals contain the ID identifier of the BLE tire pressure sensor 102. The BLE master node 101 scans the Bluetooth signals from the BLE tire pressure sensor 102, establishing Bluetooth connections with the BLE tire pressure sensor 102 based on the ID identifiers. At this time, although the BLE master node 101 has established Bluetooth connections with the BLE tire pressure sensor 102, it cannot identify the mounting position of this BLE tire pressure sensor 102. It needs to determine the position of the BLE tire pressure sensor 102 by the BLE positioning anchor 103.

Preferably, after the BLE master node 101 establishes a connection with the BLE tire pressure sensor 102, the BLE tire pressure sensor 102 transmits the acquired tire state information and its own ID identifiers to the BLE master node 101 according to changes in tire pressure and/or tire acceleration of the corresponding tire.

Preferably, the BLE tire pressure sensor 102 can be powered via an independent power supply. The BLE positioning anchors 103 can be powered via the vehicle network.

Preferably, the tire pressure monitoring system 100 further includes a body control unit 104 and a BLE digital key 105. The BLE digital key 105 activates Bluetooth advertising to broadcast signals carrying its ID identifiers, the BLE master node 101 scans the Bluetooth signals and establishes a Bluetooth connection based on the ID identifier of the BLE digital key 105. The body control unit 104 performs door lock unlocking and/or vehicle startup according to the recognition result of the BLE digital key 105 obtained by the BLE master node 101. Specifically, the BLE master node 101 can be used for calibrating both the BLE tire pressure sensor 102 and the BLE digital key 105. The reuse of the BLE master node 101 cuts down equipment and installation costs, reduces the number of devices, and lowers the overall complexity of the vehicle system.

Preferably, the BLE master node 101 transmits the tire positions of the BLE tire pressure sensor 102 and corresponding tire state information to the body control unit 104 via the vehicle network. The body control unit 104 can execute vehicle control strategies according to the tire state information to improve driving safety.

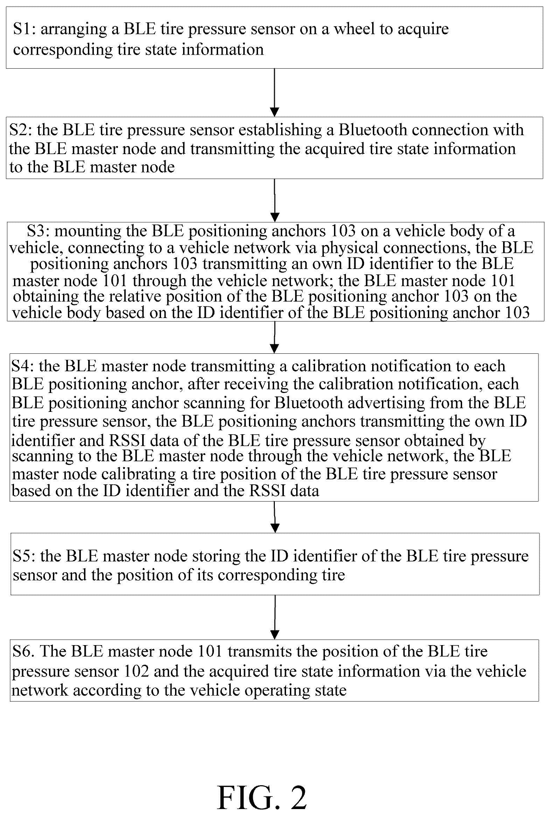

Fig. 2 is a flowchart of a calibration method for a BLE tire pressure sensor according to an embodiment of the present invention. As shown in the figure, the present invention further provides a calibration method for a BLE tire pressure sensor, which is applicable to the aforementioned tire pressure monitoring system 100, and the method includes the following steps:
S1: arranging a BLE tire pressure sensor 102 on a wheel to acquire corresponding tire state information;
S2: the BLE tire pressure sensor 102 establishing a Bluetooth connection with the BLE master node 101 and transmitting the acquired tire state information (containing its own ID identifier) to the BLE master node 101;
S3: mounting the BLE positioning anchors 103 on a vehicle body of a vehicle, connecting to a vehicle network via physical connections, the BLE positioning anchors 103 transmitting an own ID identifier to the BLE master node 101 through the vehicle network; the BLE master node 101 obtaining the relative position of the BLE positioning anchor 103 on the vehicle body based on the ID identifier of the BLE positioning anchor 103. As mentioned above, since the BLE positioning anchors 103 are connected to the BLE master node 101 via the vehicle network, their relative positions and distances to the BLE master node 101 are fixed. That is, the BLE master node 101 is aware of the position of each BLE positioning anchor 103 on the vehicle body.
S4: the BLE master node 101 transmitting a calibration notification to each BLE positioning anchor 103, and after receiving the calibration notification, the BLE positioning anchor 103 scanning for Bluetooth advertising from the BLE tire pressure sensor 102. The BLE positioning anchor 103 transmits its own ID identifier and RSSI data of the BLE tire pressure sensor 102 obtained by scanning to the BLE master node 101 through the vehicle network, and the BLE master node 101 calibrates a tire position of the BLE tire pressure sensor 102 based on the ID identifier and the RSSI data. For example, if one of the BLE positioning anchors 103 is mounted on the wheel arch of the vehicle's right rear wheel, the strongest RSSI data it receives shall come from the BLE tire pressure sensor 102 mounted on the right rear wheel. The BLE master node 101 matches the ID identifier of the BLE tire pressure sensor 102 corresponding to the BLE positioning anchor 103 and the strongest RSSI data received by this BLE positioning anchor 103 with the received tire state information, so as to calibrate that the corresponding BLE tire pressure sensor 102 is arranged on the right rear wheel.
S5: the BLE master node storing the ID identifier of the BLE tire pressure sensor 102 and the position of its corresponding tire. The BLE master node 101 determines which BLE tire pressure sensor 102 of the vehicle's tire that the received state information comes from based on the ID identifier of the BLE tire pressure sensor

Preferably, in step S4, the BLE master node 101 filters and analyzes the received RSSI data and sorts the data by signal strength. The BLE master node 101 calibrates the tire position of the BLE tire pressure sensor 102 based on the positions of the BLE positioning anchors 103 on the vehicle body and the signal strength. It should be noted that a stronger RSSI signal indicates a shorter distance, while a weaker signal indicates a longer distance.

Preferably, the calibration method for the BLE tire pressure sensor 102 further comprises step S6. The BLE master node 101 transmits the position of the BLE tire pressure sensor 102 and the acquired tire state information via the vehicle network according to the vehicle operating state, facilitating subsequent vehicle operation control.

Preferably, when replacing one of the BLE tire pressure sensors 102, the BLE master node 101 detects an unrecorded ID identifier. (i.e., receiving signals carrying ID identifiers not in the original stored data), then it executes step S4 and step S5 to calibrate the new BLE tire pressure sensor 102, and storing its ID identifier and corresponding tire position. That is to say, when replacing one of the BLE tire pressure sensor 102, the BLE master node 101 automatically initiates calibration to identify the position of the new BLE tire pressure sensor 102.

Preferably, the BLE tire pressure sensor 102 supports OTA upgrade via the vehicle network according to diagnostic requirements of the vehicle network system. That is, the BLE master node 101 can perform over-the-air upgrade on the BLE tire pressure sensor 102 to further enhance vehicle safety.

Preferably, if the BLE master node 101 obtains abnormal tire state information from the BLE tire pressure sensor 102 or fails to collect such information, execute following steps:
T1: traversing all BLE positioning anchors 103, and the BLE master node 101 sends a calibration notification to one of the BLE positioning anchors closest to the BLE tire pressure sensor;
T2: the BLE positioning anchors starting scanning Bluetooth advertisements of the BLE tire pressure sensor according to the calibration notification, if a connection is established between the BLE positioning anchor 103 and the BLE tire pressure sensor 102, then the BLE positioning anchor 103 transmits an own ID identifier and RSSI data of the BLE tire pressure sensor obtained by scanning to the BLE master node 101 through the vehicle network. That is, the BLE master node 101 recalibrates the BLE tire pressure sensor 102 to acquire the corresponding tire state information.

If the connection cannot be established within the time limit, send feedback to the BLE master node, and the return to step T1. The BLE master node then sends a calibration notification to the BLE positioning anchor closest to the BLE tire pressure sensor among the remaining BLE positioning anchors, followed by executing step T2.

Preferably, if the BLE master node fails to collect tire state information from a certain BLE tire pressure sensor, the BLE master node designates one or several nearby BLE positioning anchors to receive the state information of this BLE tire pressure sensor according to the proximity principle, the designated BLE positioning anchor serve as relay node of the BLE master node, and are used to transmit the tire state information of the BLE tire pressure sensor to the BLE master node. For example, for a long vehicle body, the BLE master node may fail to collect the tire state information of a certain BLE tire pressure sensor due to excessive distance. In this case, the BLE master node designates one or several BLE positioning anchors near the BLE tire pressure sensor according to the proximity principle to receive the tire state information therefrom. If the designated BLE positioning anchor can receive the tire state information from the BLE tire pressure sensor, it acts as a relay node of the BLE master node and transmits the received tire state information of the BLE tire pressure sensor to the BLE master node. That is to say, the tire state information of the BLE tire pressure sensor is transmitted to the BLE positioning anchor via Bluetooth signal, and then sent to the BLE master node through the vehicle network, so as to ensure that the BLE master node can acquire the tire state information from all BLE tire pressure sensors on the vehicle. The vehicle control system can adjust the vehicle control strategy according to the tire state information from the BLE master node, so as to ensure the safety and reliability of vehicle operation.

The tire pressure monitoring system and the calibration method for BLE tire pressure sensor provided by the present invention have the following advantages:
- enabling automatic and accurate calibration of BLE tire pressure sensor, the BLE master node automatically identifying the position of the BLE tire pressure sensor mounted on each vehicle tire; collecting RSSI values of each BLE tire pressure sensor by different BLE positioning anchors, and the position of each BLE tire pressure sensor is accurately calibrated by comparing signal strengths of RSSI data;
- BLE positioning anchors can provide proxy and relay services; when the BLE master node fails to receive data from the tire pressure sensor within a certain period of time or the master node needs to verify the data of the tire pressure sensor, adopting nearby BLE positioning anchors as proxy relays to read tire pressure data from the BLE tire pressure sensor; on the one hand, it improves data security; on the other hand, it enables data reception from Bluetooth tire pressure devices through multiple channels;
- the BLE master node supports over-the-air upgrade for all Bluetooth tire pressure devices, which improves vehicle driving safety;
- the BLE master node is reused for BLE digital key, which reduces equipment quantity and installation costs, and reducing the overall complexity of the vehicle system.

It will be apparent to those skilled in the art that various modifications and variations can be made to the above exemplary embodiments of the present invention without departing from the spirit and scope thereof. Therefore, the present invention is intended to cover all modifications and variations falling within the scope of the appended claims and their equivalent technical solutions.

## Claims

1. A tire pressure monitoring system, wherein, comprising:
a BLE master node;
a BLE tire pressure sensor, mounted on wheel to acquire a stage information of a corresponding tire, the BLE tire pressure sensor transmitting obtained tire stage information to the BLE master node;
a BLE positioning anchor, mounted on a vehicle body of a vehicle, connecting to a vehicle network via physical connections, the BLE positioning anchor transmitting an own ID identifier and RSSI data of the BLE tire pressure sensor obtained by scanning to the BLE master node through the vehicle network, the BLE master node calibrating a tire position of the BLE tire pressure sensor based on the ID identifier and the RSSI data.

2. The tire pressure monitoring system according to claim 1, wherein, the BLE master node determines mounting position of the BLE positioning anchor on the vehicle body according to the ID identifier of the BLE positioning anchor, the BLE master node filters and analyzes received RSSI data and sorting by signal strength, and the BLE master node calibrates the tire position corresponding to the BLE tire pressure sensor based on mounting position of the BLE positioning anchor on the vehicle body and signal strength.

3. The tire pressure monitoring system according to claim 1, wherein, if a corresponding tire acceleration obtained by the BLE tire pressure sensor is 0, enable a low-speed Bluetooth advertising to send a Bluetooth signal, the Bluetooth signal including the ID identifier of the BLE tire pressure sensor;
the BLE master node scans the Bluetooth signal and establishes Bluetooth connection based on the ID identifier of the BLE tire pressure sensor.

4. The tire pressure monitoring system according to claim 3, wherein, after the connection is established between the BLE master node and the BLE tire pressure sensor, the BLE tire pressure sensor transmits acquired tire state information to the BLE master node according to changes of the tire pressure and/or acceleration of a corresponding tire.

5. The tire pressure monitoring system according to claim 1, wherein, the BLE tire pressure sensor is powered by an independent power supply.

6. The tire pressure monitoring system according to claim 4, wherein, further comprising a body control unit and a BLE digital key, the BLE digital key initiating Bluetooth advertising to broadcast the **ID** identifier that contains the BLE digital key; the BLE master node scanning the Bluetooth signal and establishing a Bluetooth connection based on the **ID** identifier of the BLE digital key;
the body control unit executing door lock unlocking and/or vehicle startup according to an identification result of the BLE digital key by the BLE master node.

7. The tire pressure monitoring system according to claim 6, wherein, the BLE master node transmits the tire position where the BLE tire pressure sensor is arranged and corresponding tire state information to the body control unit via the vehicle network.

8. A calibration method for a BLE tire pressure sensor, applicable to the tire pressure monitoring system according to claim 1, wherein, comprising
S1: arranging a BLE tire pressure sensor on a wheel to acquire corresponding tire state information;
S2: the BLE tire pressure sensor establishing a Bluetooth connection with the BLE master node and transmitting the acquired tire state information to the BLE master node;
S3: mounting BLE positioning anchors on a vehicle body of a vehicle, connecting to a vehicle network via physical connections, the BLE positioning anchors transmitting an own ID identifier to the BLE master node through the vehicle network, the BLE master node obtaining a tire position of the BLE tire pressure sensor based on the ID identifier;
S4: the BLE master node transmitting a calibration notification to one of the BLE positioning anchors, after receiving the calibration notification, the BLE positioning anchors scanning for Bluetooth advertising from the BLE tire pressure sensor, the BLE positioning anchors transmitting the own ID identifier and RSSI data of the BLE tire pressure sensor obtained by scanning to the BLE master node through the vehicle network, the BLE master node calibrating a tire position of the BLE tire pressure sensor based on the ID identifier and the RSSI data;
S5: the BLE master node storing the ID identifier of the BLE tire pressure sensor and the position of its corresponding tire.

9. The calibration method for a BLE tire pressure sensor according to claim 8, wherein, in step S4, the BLE master node filters and analyzes the received RSSI data and sorts the data according to signal strength., the BLE master node calibrating the tire position corresponding to the BLE tire pressure sensor based on the mounting positions of the BLE positioning anchors on the vehicle body and signal strength.

10. The calibration method for a BLE tire pressure sensor according to claim 9, wherein, the BLE master node transmits the tire position of the BLE tire pressure sensor and the acquired tire state information outward via the vehicle network according to the vehicle operating state.

11. The calibration method for a BLE tire pressure sensor according to claim 9, wherein, if replacing one BLE tire pressure sensor, the BLE master node detects absence of the corresponding ID identifier of the BLE tire pressure sensor;
perform steps S4 and S5 to calibrate the BLE tire pressure sensor, storing the **ID** identifier of the BLE tire pressure sensor and corresponding tire position.

12. The calibration method for a BLE tire pressure sensor according to claim 9, wherein, the BLE tire pressure sensor realizes OTA upgrade via the vehicle network according to a diagnostic requirement of the vehicle network system.

13. The calibration method for a BLE tire pressure sensor according to claim 9, wherein,
if the tire state information of the BLE tire pressure sensor acquired by the BLE master node is abnormal or cannot be collected, perform following steps:
T1: traversing all BLE positioning anchors, and the BLE master node sends a calibration notification to one of the BLE positioning anchors that closest to the BLE tire pressure sensor;
T2: the BLE positioning anchors starting scanning Bluetooth advertisement of the BLE tire pressure sensor, if a connection is established between the BLE positioning anchors and the BLE tire pressure sensor, then the BLE positioning anchors transmits an own **ID** identifier and RSSI data of the BLE tire pressure sensor obtained by scanning to the BLE master node through the vehicle network; if the connection cannot be established upon timeout, then sending feedback to the BLE master node, returning to Step T1.

14. The calibration method for a BLE tire pressure sensor according to claim 9, wherein, if the BLE master node fails to collect tire state information from any one BLE tire pressure sensor, the BLE master node follows the proximity principle, designate one or several of the BLE positioning anchors to receive tire state information from the BLE tire pressure sensor, the designated BLE positioning anchors serve as relay nodes of the BLE master node to transmit the tire state information of the BLE tire pressure sensor to the BLE master node.
